# DEMANDE DE BREVET EUROPEEN

(11) **EP 3 764 423 A1**
(43) Date de publication de la demande: **13.01.2021**
(21) Numéro de dépôt: 20183804.2
(22) Date de dépôt: 02.07.2020
(51) Int. Cl.: H01M 2/10, H01M 2/20, H01M 10/6556, H01M 10/625, H01M 10/627, H01M 10/643, H01M 10/6568, H01M 10/6569, H01M 10/613, H01M 10/6551, H01M 10/6553, H01M 10/656

(54) **BUSBAR POUR PACK-BATTERIE, DESTINÉE À CONNECTER ÉLECTRIQUEMENT AU MOINS UN ACCUMULATEUR DU PACK ET À PERMETTRE UNE CIRCULATION D'UN FLUIDE CALOPORTEUR EN SON SEIN POUR LE REFROIDISSEMENT OPTIMAL DE L'ACCUMULATEUR ET DU PACK, NOTAMMENT EN CAS D'EMBALLEMENT THERMIQUE**

(30) Priorité: 08.07.2019 FR 1907619
(71) Demandeur: Commissariat à l'Energie Atomique et aux Energies Alternatives, 75015 Paris (FR)
(72) Inventeur: MASSON, Olivier, 38054 GRENOBLE (FR); COSTE, Pierre, 38054 GRENOBLE (FR); REYTIER, Magali, 38054 GRENOBLE (FR)
(74) Mandataire: Nony

(57) **Abrégé**

Busbar (10) pour pack-batterie (P), destiné à connecter électriquement au moins un accumulateur électrochimique (Al, A2, ...) du pack, de préférence à connecter électriquement plusieurs accumulateurs électrochimiques du pack entre eux, comprenant une enveloppe électriquement conductrice et étanche (10) destinée elle-même à conduire le courant des accumulateurs et adaptée pour contenir un liquide caloporteur dont la température de vaporisation est choisie pour être comprise entre une valeur proche de 90% de la température d'auto-échauffement (T1) et une valeur proche de 110% de la température d'emballement thermique (T2) des accumulateurs du pack, l'enveloppe étanche étant adaptée pour garantir un apport en liquide caloporteur au plus près de chaque accumulateur auquel elle est destinée à être connectée, de préférence à proximité d'au moins une de ses bornes de sorties.

## Description

### Domaine technique

La présente invention concerne le domaine des accumulateurs électrochimiques, et plus particulièrement à des accumulateurs métal-ion.

Plus particulièrement, l'invention a trait à un busbar pour pack-batterie.

On rappelle ici qu'un busbar est une bande ou barre en matériau électriquement conducteur, éventuellement feuilletée avec un ou des matériaux électriquement isolants, qui est fixée, de préférence vissée ou soudée, à une borne de sortie d'au moins un accumulateur électrochimique pour assurer la connexion électrique avec un autre accumulateur électrochimique d'un pack-batterie ou un autre élément d'entrée/sortie électrique. L'invention vise principalement à optimiser le refroidissement des accumulateurs d'un pack-batterie tel que l'énergie d'un emballement thermique d'un accumulateur donné au sein du pack ne puisse se propager aux autres accumulateurs.

Bien que décrite en référence à un accumulateur Lithium-ion, l'invention s'applique à tout accumulateur électrochimique métal-ion, c'est-à-dire également les accumulateurs sodium-ion, Magnésium-ion, Aluminium-ion...ou de manière plus générale à tout accumulateur électrochimique.

Un pack-batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

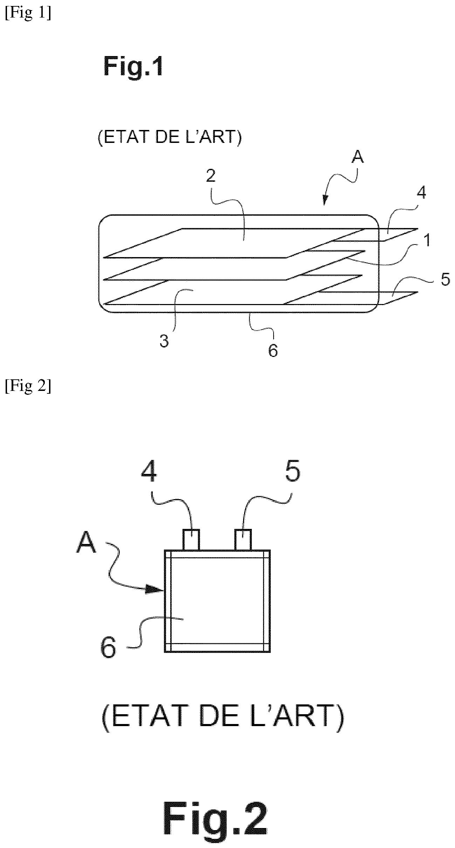

Telle qu'illustrée schématiquement en figures 1 et 2, une batterie ou accumulateur lithium-ion comporte usuellement au moins une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à 1' anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles comporte une anode, une cathode et un électrolyte. Plusieurs types de géométrie d'architecture conventionnelle sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO₄, LiCoO₂, LiNi_{0.33}Mn_{0.33}Co_{0.33}O₂. L'électrode négative ou anode 3 est très souvent constituée de carbone graphite ou en Li₄TiO₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouches, constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide utilisé est constitué d'un boitier métallique, typiquement en acier inoxydable (inox 316L ou inox 304) ou en aluminium (Al 1050 ou Al 3003), ou encore en titane.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique autour d'un mandrin cylindrique. Des formes prismatiques de boitiers ont également déjà été réalisées par bobinage autour d'un mandrin prismatique.

La demande de brevet FR3004292 décrit l'utilisation de l'intérieur du mandrin en tant que lame d'air pour refroidir à cœur une cellule enroulée d'un accumulateur métal-ion.

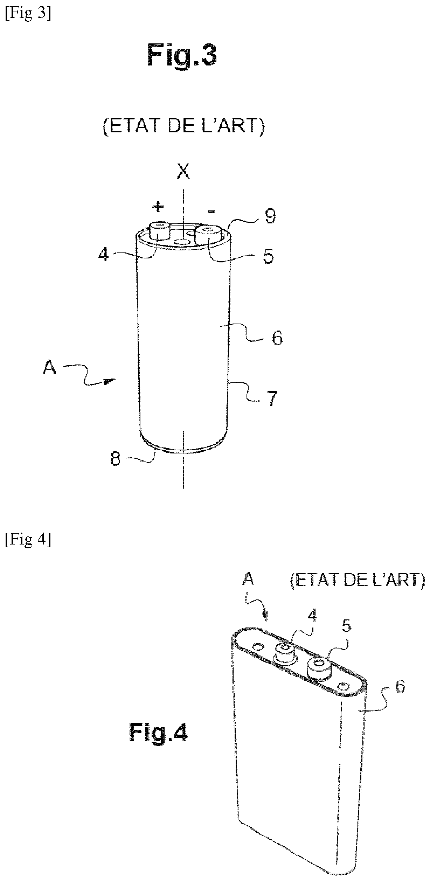

Un des types de boitier rigide de forme cylindrique, usuellement fabriqué pour un accumulateur Li-ion de forte capacité, est illustré en figure 3.

Un boitier rigide de forme prismatique est également montré en figure 4.

Le boitier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 4, 5. Une des bornes de sortie (pôles), par exemple la borne négative 5 est soudée sur le couvercle 9 tandis que l'autre borne de sortie, par exemple la borne positive 4, passe à travers le couvercle 9 avec interposition d'un joint non représenté qui isole électriquement la borne positive 4 du couvercle.

Le type de boitier rigide largement fabriqué consiste également en un godet embouti et un couvercle, soudés entre eux sur leur périphérie. En revanche, les collecteurs de courant comprennent une traversée avec une partie faisant saillie sur le dessus du boitier et qui forme une borne aussi appelée pôle apparent de la batterie.

Un pack batterie P est constitué d'un nombre variable d'accumulateurs pouvant atteindre plusieurs milliers qui sont reliés électriquement en série ou en parallèle entre eux et généralement par des barres de connexion, appelées usuellement busbars.

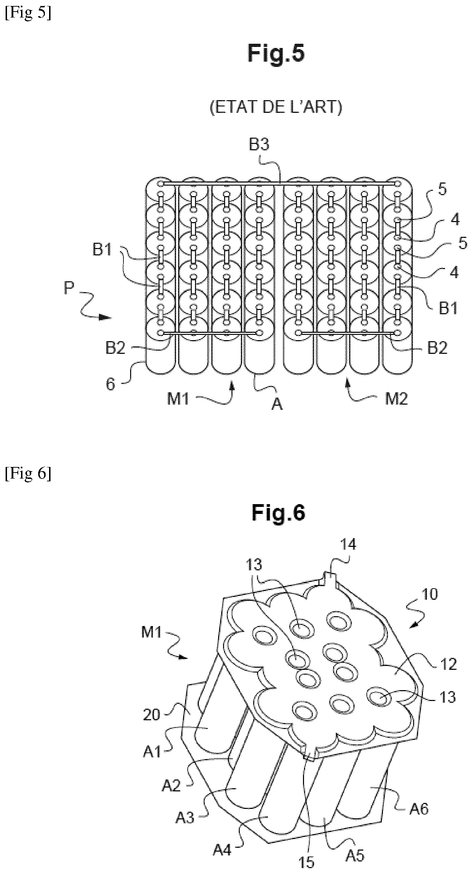

Un exemple de pack-batterie P est montré en figure 5. Ce pack est constitué de deux modules M1, M2 d'accumulateurs Li-ion A identiques et reliés entre eux en série, chaque module M1, M2 étant constitué de quatre rangées d'accumulateurs reliés en parallèle, chaque rangée étant constituée d'un nombre égal à six accumulateurs Li-ion.

Comme représenté, la connexion mécanique et électrique entre deux accumulateurs Li-ion d'une même rangée est réalisée par vissage de busbars B1, avantageusement en cuivre, reliant chacune une borne positive 4 à une borne négative 5. La connexion entre deux rangées d'accumulateurs en parallèle au sein d'un même module M1 ou M2 est assurée par un busbar B2, également avantageusement en cuivre. La connexion entre les deux modules M1, M2 est assurée par un busbar B3, également avantageusement en cuivre.

Dans le développement et la fabrication des batteries lithium-ion, pour chaque profil/nouvelle demande, quel que soit les acteurs du marché, cela nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Différents dispositifs passifs ou actifs ayant une fonction de sécurité peuvent également être intégrés au niveau d'une cellule (accumulateur), et/ou d'un module et/ou du pack-batterie pour prévenir les problèmes, lorsque la batterie se retrouve dans des conditions dites de fonctionnement abusif.

Un système électrochimique lithium, que ce soit à l'échelle de la cellule (accumulateur), du module ou du pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur électrochimique doit fonctionner dans une plage de température définie, typiquement généralement inférieure à 70°C à sa surface extérieure de boitier, sous peine de dégrader ses performances, voire même de le dégrader physiquement jusqu'à destruction. On peut citer pour exemple les accumulateurs lithium de chimie fer-phosphate qui ont une plage de fonctionnement comprise généralement entre -20 °C et +60 °C. Au-delà de 60°C, les matériaux peuvent subir des dégradations importantes réduisant les performances de la cellule. Au-delà d'une température dite d'emballement thermique pouvant être comprise entre 70°C et 110°C, il y a amorçage de réactions chimiques internes exothermiques. Lorsque l'accumulateur n'est plus capable d'évacuer suffisamment de chaleur, la température de la cellule augmente jusqu'à destruction, ce phénomène étant désigné usuellement sous l'appellation d'emballement thermique (en anglais «*Thermal Runaway*»). Autrement dit, un emballement thermique se produit dans une cellule (accumulateur), lorsque l'énergie dégagée par les réactions exothermiques qui surviennent à l'intérieur de celle-ci, excède la capacité à la dissiper à l'extérieur. Cet emballement peut être suivi d'une génération de gaz et d'explosion et/ou feu.

Également, le maintien d'une température inférieure à 70°C permet d'augmenter la durée de vie d'un accumulateur, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Au niveau d'une cellule (accumulateur), les différents dispositifs internes de protection connus sont:
- un dispositif à coefficient de température positif (PTC acronyme anglo-saxon pour « *Polymeric positive Temperature Coefficient* ») : actuellement, un grand nombre d'accumulateurs cylindriques déjà commercialisés en sont munis. Un tel dispositif se présente sous la forme d'un anneau en polymère (polyéthylène) laminé avec un métal. En cas de surcharge, ce polymère chauffe, change de phase, devient plus résistif et limite ainsi le passage du courant ;
- un dispositif d'interruption du courant (CID pour « *current interruption device* ») : il interrompt le courant si la pression du gaz dans la cellule dépasse les limites spécifiées ;
- un dispositif coupe circuit (en anglais « *shutdown* ») qui empêche la génération de courants élevés ;
- un évent constitué d'une soupape ou d'un disque de rupture, qui s'ouvre lorsque la pression augmente brutalement, et dépasse une pression critique déterminée, afin d'éviter l'explosion de la cellule ;
- un fusible thermique, actuellement mis en œuvre dans les accumulateurs de grande capacité, qui coupe le courant dès lors que la température dans l'accumulateur est trop élevée.

Dans une batterie, ou pack-batterie à plusieurs accumulateurs Li-ion, la mise en série ou parallèle d'accumulateurs plus ou moins différents peut avoir des conséquences sur la performance résultante du pack.

Il est ainsi reconnu que dans un pack-batterie, par exemple de véhicule électrique, les dispersions de vieillissements peuvent être élevées en fonction par exemple de la position des accumulateurs, suite à des dissymétries de vieillissement entre les accumulateurs ou des différences d'utilisations (variations thermiques entre le cœur et les bords du pack, gradient de courant...).

Aussi, afin de limiter le vieillissement prématuré du pack, il est nécessaire d'optimiser la température de fonctionnement et la dispersion de température d'un accumulateur à l'autre. Un accumulateur (ou des accumulateurs) qui vieillit (vieillissent) plus vite que les autres peut (peuvent) avoir un impact direct sur les performances électriques du pack-batterie complet. Cela se traduit par la diminution de la capacité totale utilisable du pack batterie. A l'échelle du module et du pack, typiquement en dessous de 0°C par exemple, il peut être nécessaire d'avoir recours à un BMS, afin de limiter la puissance demandée au pack afin d'éviter une dégradation des accumulateurs particulièrement pour la charge de la batterie. On rappelle ici que le BMS (acronyme anglais de « *Battery Management System* ») est utilisé afin de protéger les éléments de facteurs augmentant leur dangerosité, tel des courants trop élevés, des potentiels non adaptés (trop élevés ou trop faibles), des températures limites. Le BMS stoppe donc les applications de courant (charge, décharge) dès l'atteinte de tensions seuils.

Au-delà d'une température supérieure, typiquement de l'ordre 70°C, il convient également d'être vigilant car des réactions électrochimiques peuvent conduire à la destruction des accumulateurs unitaires et provoquer une propagation d'un défaut interne à l'accumulateur, généralement un court-circuit interne, qui peut conduire à l'extrême à l'explosion du pack. Dans ce cas, il est également nécessaire d'avoir recours au BMS, afin de protéger les accumulateurs.

La difficulté intervient pour assurer l'uniformité de la température au sein d'un pack-batterie. Par conséquent, ces considérations thermiques imposent généralement une régulation de la température des accumulateurs d'un pack batterie.

Diverses stratégies de gestion thermique sont proposées pour optimiser les systèmes de refroidissement intégré et permettre au pack de batteries de fonctionner à une température ambiante cible et d'assurer une homogénéité de la température des cellules. Le système de gestion thermique doit donc être capable de réagir, et de manière très précise, si un gradient de température est observé au niveau des cellules le constituant.

Dans la littérature, les solutions divulguées pour tenter d'assurer une homogénéité de température au sein d'un pack-batterie peuvent être classées essentiellement en trois catégories.

La première catégorie concerne l'utilisation de plaques froides.

Le brevet US8609268 divulgue ainsi un système de plaque froide à l'intérieur duquel un fluide réfrigérant s'écoule, permettant de drainer la chaleur d'accumulateurs au contact de la plaque froide.

La demande de brevet WO2011/013997 propose des ailettes de refroidissement agencées à l'intérieur d'un empilement de cellules planes pour drainer la chaleur des cellules vers un fluide circulant en bas de l'empilement.

La deuxième catégorie concerne le refroidissement par matériau à changement de phase. Dans la demande de brevet DE102013017396A1, le liquide caloporteur en ébullition est directement en contact avec les cellules dans le module de la batterie, afin de contrôler la température et de la maintenir dans une plage de température prédéterminée.

La troisième catégorie concerne les solutions où on fait circuler un fluide caloporteur (gazeux ou liquide) au sein d'un pack-batterie.

Le brevet US5320190 propose ainsi une circulation d'air pour refroidir un pack-batterie de véhicule, soit en utilisant directement l'air impactant le véhicule lors du roulage, soit en ayant recours à un ventilateur pour les phases en stationnement ou juste après le roulage. Le brevet CN202259596U propose un pack-batterie qui intègre des distributeurs en air. Dans la demande de brevet WO2012/165781, il est proposé un système de plaques de guidage d'air qui permet à priori de réduire l'écart de température entre des modules de batteries.

Un liquide de refroidissement peut être utilisé à la place de l'air. En effet, les notions de coût, d'encombrement et de masse supplémentaire peuvent être des facteurs prépondérants en fonction de l'application considérée.

Par exemple, un refroidissement par air est la solution la moins onéreuse puisque comme indiqué, elle consiste en une ventilation d'air forcée entre les accumulateurs. En revanche, les performances thermiques d'un refroidissement par air sont de faible qualité du fait du coefficient d'échange peu élevé et de la faible inertie thermique Ainsi, dans ce type de refroidissement, le premier accumulateur va s'échauffer malgré tout au contact de l'air et la température d'air va augmenter. Au passage du deuxième accumulateur, l'air est plus chaud et l'accumulateur est plus chaud que le premier. Au final, on peut donc obtenir des accumulateurs dont la température est inhomogène ou dont le refroidissement est insuffisant pour limiter le risque d'emballement.

Les solutions par refroidissement liquide sont donc nettement plus efficaces en termes d'échanges thermiques: elles consistent en un refroidissement direct par conduction thermique à l'aide d'un liquide, de préférence diélectrique.

Par exemple, la demande de brevet WO2008/156737 et le brevet US2013196184 proposent un système de canaux qui épousent chacun une partie de la périphérie de plusieurs accumulateurs cylindriques parallèles les uns aux autres. Un liquide caloporteur s'écoule à l'intérieur de ces canaux pour drainer la chaleur.

Le brevet US8877366 concerne une solution de refroidissement par liquide s'écoulant dans des tubulures externes qui refroidissent par conduction thermique des ailettes insérées entre des accumulateurs.

Le brevet FR3010834 divulgue un dispositif de régulation thermique d'un pack batterie, comprenant un échangeur de chaleur à tubes au contact des accumulateurs au fond du carter (enveloppe) du pack-batterie.

La société MERSEN a proposé un pack-batterie avec des busbars sur lesquelles des tuyaux à plusieurs coudes sont rapportée et soudés, de l'eau de préférence glycolée circulant à l'intérieur de ces tuyaux lors du fonctionnement du pack-batterie à des fins de refroidissement. On pourra se reporter:
https://www.mersen.com/sites/default/files/publications-media/16-markets-transportation-ev-hev-emobility-presentation-mersen.pdf. Comme explicité dans cette publication, les tuyaux sont prévus pour éliminer les points chauds du pack en fonctionnement.

On pourra aussi se reporter à la demande de brevet EP3293786 qui décrit un système similaire de plaque de refroidissement.

Comme évoqué ci-dessus, une cellule ou un accumulateur du pack-batterie peut subir un emballement thermique.

Or, tous les dispositifs de refroidissement selon l'art antérieur, notamment celui de la société MERSEN, ne permettent pas de mitiger réellement un emballement thermique d'un accumulateur au sein d'un pack-batterie, c'est-à-dire qui permettent d'atténuer la transmission de l'énergie dissipée par un emballement thermique de l'accumulateur aux autres accumulateurs du pack, afin d'éviter qu'eux-mêmes ne rentrent dans une situation d'emballement thermique.

Il existe donc un besoin pour améliorer les solutions de refroidissement de pack-batterie, notamment afin d'absorber l'énergie dissipée par un emballement thermique d'un accumulateur donné au sein du pack et ainsi de limiter la température des autres accumulateurs du pack et par là d'éviter que ces autres accumulateurs ne partent également en emballement thermique.

En outre, l'amélioration doit aussi être optimisée en termes de poids et d'encombrement pour préserver les performances du pack.

Le but de l'invention est de répondre au moins en partie à ce(s) besoin(s).

### Exposé de l'invention

Pour ce faire, l'invention concerne, sous l'un de ses aspects, un busbar pour pack-batterie , destiné à connecter électriquement au moins un accumulateur électrochimique du pack, de préférence à connecter électriquement plusieurs accumulateurs électrochimiques du pack entre eux, comprenant une enveloppe électriquement conductrice et étanche adaptée pour contenir un liquide caloporteur dont la température de vaporisation est choisie pour être comprise entre une valeur proche de 90% de la température d'auto-échauffement (T1) et une valeur proche de 110% de la température d'emballement thermique (T2) des accumulateurs du pack, l'enveloppe étanche étant adaptée pour garantir un apport en liquide caloporteur à proximité de chaque accumulateur auquel elle est destinée à être connectée, de préférence à proximité d'au moins une de ses bornes de sorties.

En ce qui concerne le phénomène d'emballement thermique, on se reportera à la publication [1] et au protocole décrit dans cette publication. Les températures dites « d'auto-échauffement » et « d'emballement thermique » sont respectivement notées T1 et T2 dans cette publication.

La température T1, typiquement 70°C, dans la figure 2 de la publication, est la température à partir de laquelle l'accumulateur s'échauffe sans source externe à une vitesse typique de 0,02 °C/min en conditions adiabatiques.

La température T2, typiquement 150°C, dans la figure 2 de la publication, est la température à partir de laquelle l'accumulateur s'échauffe à une vitesse d'échauffement typique de 10°C/min en conditions adiabatiques, ce qui conduit à la fusion du séparateur dans le faisceau électrochimique de l'accumulateur, à un court-circuit et donc à l'effondrement de la tension.

Par « emballement thermique », on peut ainsi comprendre ici et dans le cadre de l'invention, un rapport entre la valeur de la dérivée de la température d'échauffement et celle du temps au moins égal à 0,02°C par min.

Selon un premier mode de réalisation, l'enveloppe est un volume fini étanche contenant le liquide caloporteur, destiné à être agencé au moins en partie à proximité de chaque accumulateur auquel elle est connectée, de préférence à proximité d'au moins une des bornes de sorties de chaque accumulateur.

Selon un deuxième mode de réalisation, l'enveloppe est une partie d'un circuit de circulation du liquide caloporteur destinée à être agencée au moins en partie à proximité de chaque accumulateur auquel elle est connectée, de préférence à proximité d'au moins une des bornes de sorties de chaque accumulateur. Selon ce deuxième mode, le liquide peut soit circuler lorsque la pompe du système de refroidissement est en marche, soit rester statique dans l'enveloppe étanche lorsque la pompe est à l'arrêt.

Pour ce premier et deuxième mode de réalisation, comme précisé ci-après, il est avantageux de faire en sorte que le liquide caloporteur puisse se répartir au sein de l'enveloppe par gravité, notamment en cas d'ébullition.

Selon un mode de construction avantageux, l'enveloppe n'est pas une pièce rapportée sur le busbar, mais est constituée de deux tôles électriquement conductrices, de préférence métalliques, destinées à conduire le courant des accumulateurs, et assemblées entre elles de manière étanche, de préférence par soudure, pour délimiter intérieurement un contenant de liquide caloporteur, destiné à être agencé en regard ou autour d'une face d'extrémité de chaque accumulateur.

Le fait de réaliser l'enveloppe étanche avec un assemblage de tôles électriquement conductrices, de préférence métalliques, est particulièrement avantageux. Du fait que comparativement à un busbar selon l'état de l'art, on répartit en substance son épaisseur sur celles des deux tôles, le busbar selon l'invention est plus souple, ce qui le rend intéressant pour l'intégration au sein d'un pack-batterie.

Le fait que le busbar soit réalisé en tôles permet aussi de structurer sa surface au besoin pour améliorer l'échange avec le fluide caloporteur.

En outre, un busbar selon l'invention pourra avoir une épaisseur totale plus faible grâce à son refroidissement intrinsèque à la présence du liquide caloporteur. Par conséquent, un busbar en tant que tel est un moins bon conducteur thermique, pour ce qui est de son enveloppe métallique, qu'un busbar massif selon l'état de l'art. Sa faible épaisseur facilitera l'échange de chaleur entre la cellule dégageant de la chaleur et le fluide caloporteur. Celui-ci déplacera alors la chaleur emmagasinée au-delà des accumulateurs adjacents, limitant ainsi la chaleur propagée aux cellules adjacentes à celle émettant de la chaleur. Cela favorise aussi une meilleure protection contre la propagation d'emballement thermique

Selon une première variante de réalisation, le contenant est délimité par toute la surface de tôle destinée à venir en regard des accumulateurs, à l'exception des zones destinées à venir en regard des espaces entre accumulateurs. Ainsi, selon cette première variante, en quelque sorte on crée une poche de liquide caloporteur qui va se situer en regard de la surface totale des extrémités d'accumulateurs. On précise ici que les soudures sur les accumulateurs dans cette variante ne sont pas réalisées au travers des deux tôles simultanément pour préserver le volume du contenant.

Selon une deuxième variante de réalisation, le contenant est délimité par toute la surface de tôle destinée à venir en regard des accumulateurs, à l'exception des zones destinées à venir en regard des faces d'extrémité des accumulateurs. Ainsi, selon cette deuxième variante, en quelque sorte on crée une poche de liquide caloporteur qui va être entre les extrémités des accumulateurs adjacents.

Avantageusement, l'enveloppe comprend des trous traversant les deux tôles assemblées, en dehors des zones du contenant du liquide, les trous traversant étant destinés à évacuer les gaz émis par au moins un accumulateur en emballement thermique.

Avantageusement encore, les trous traversants sont répartis en anneaux, chaque anneau étant destiné à venir en regard d'une face d'extrémité d'un accumulateur, de préférence autour d'une borne de sortie ou d'évent de sécurité par laquelle les gaz peuvent s'échapper. Avantageusement encore, le busbar peut comprendre une tôle supplémentaire, de préférence électriquement conductrice, et de préférence assemblée à l'enveloppe étanche, cette tôle supplémentaire étant agencée pour récupérer les gaz émis par les trous, les canaliser et les refroidir avec le liquide caloporteur.

Selon une variante de réalisation avantageuse, une des deux tôles est d'épaisseur moindre par rapport à l'autre des deux tôles, la tôle d'épaisseur moindre étant destinée à être la plus proche des accumulateurs auxquels elle est destinée à être connectée. Ainsi, la barrière thermique à passer entre l'accumulateur et le liquide caloporteur peut être diminuée. Selon cette variante, la section de passage du courant peut être assurée par la tôle extérieure que l'on peut le cas échéant épaissir à cette fin.

Selon cette variante, de préférence, les soudures d'assemblage entre les deux tôles sont distantes des zones destinées à venir en regard des bornes de sorties des accumulateurs. On limite ainsi la conduction thermique entre accumulateurs en cherchant à favoriser le passage par la tôle mince et le caloporteur et non par la tôle la plus épaisse, i.e. celle extérieure.

L'invention a également pour objet un pack-batterie comprenant au moins un module comprenant:
- une pluralité d'accumulateurs de géométrie prismatique comprenant chacun au moins une cellule électrochimique C formée d'une cathode, d'une anode et d'un électrolyte intercalé entre la cathode et l'anode, et un boitier agencé pour contenir avec étanchéité la cellule électrochimique et deux bornes de sortie faisant saillie du couvercle et/ou du fond du boitier;
- au moins un busbar tel que décrit précédemment, soudé à une des bornes de sortie d'au moins une partie des accumulateurs, afin de les relier électriquement entre eux.

Selon un mode de réalisation, le pack comprend un circuit de fluide, configuré pour faire circuler un fluide caloporteur, éventuellement diphasique liquide-vapeur, dans le busbar. De préférence, le circuit est configuré pour permettre un approvisionnement du liquide caloporteur en regard ou autour de chaque accumulateur, de manière passive par gravité. Cela permet de maintenir un bon coefficient d'échange pendant le changement de phase du caloporteur.

Avantageusement, le busbar est incliné par rapport à l'horizontal lorsque le pack est en configuration de fonctionnement. Ainsi, un busbar selon l'invention n'est pas agencé à l'horizontal et son inclinaison par rapport à l'horizontal permet de créer un effet de pompage passif par convection naturelle : le gaz issu de l'ébullition du caloporteur (changement de phase) entraine le liquide chaud vers la partie haute du busbar, laissant de la place à du liquide présent ailleurs dans l'enveloppe étanche, qui est encore froid. Cela permet de conserver au maximum un bon échange thermique entre l'enveloppe et le liquide caloporteur, les échanges thermiques avec une phase uniquement gazeuse (sans liquide dans la zone fluide) étant beaucoup moins performants. On prévoit des trous ou des évents de sécurité pour laisser passer les gaz issus du changement de phase du caloporteur car ce dernier va augmenter le volume nécessaire à l'encapsulation de celui-ci dans l'enveloppe étanche du busbar.

En sus ou à la place de ces trous de sécurité, on peut aussi envisager d'avoir des soudures entre les deux tôles de l'enveloppe qui soient plus faibles mécaniquement en partie haute pour céder à la surpression prédéfinie.

Dans un module ou l'ensemble d'un pack-batterie on peut envisager d'implanter et de connecter un busbar selon l'invention uniquement sur une face d'extrémité des accumulateurs. On peut aussi envisager d'implanter et connecter un busbar selon l'invention de part et d'autre des accumulateurs, c'est-à-dire sur leurs deux faces d'extrémité.

Ainsi, l'invention consiste essentiellement en un busbar intégré dans un ou plusieurs modules d'un pack-batterie contenant du liquide caloporteur qui peut changer de phase (liquide vers vapeur) pour absorber l'énergie dissipée par un emballement thermique d'un accumulateur donné au sein du pack.

Le changement de phase du liquide absorbe en général beaucoup d'énergie par rapport à une simple montée en température.

De ce fait, l'énergie de l'emballement thermique du premier accumulateur n'est pas intégralement transmise aux accumulateurs adjacents du pack, limitant ainsi leur température.

Par conséquent, un busbar selon l'invention permet d'éviter que les accumulateurs voisins d'un accumulateur en emballement thermique, partent eux aussi en emballement thermique. Dans le cadre de l'invention, le liquide caloporteur est avantageusement diélectrique mais peut être également électriquement conducteur.

Lorsque le liquide est diélectrique alors la liaison fluidique entre les busbars de plusieurs modules est simple, et un seul liquide peut circuler dans tout le pack-batterie, quelle que soit la tension.

Lorsque le liquide est électriquement conducteur, alors on veille à ce que la liaison fluidique entre busbars des modules ne crée pas de court-circuit entre les différents niveaux de tension. Une liste des liquides caloporteurs identifiés par les inventeurs pouvant convenir à la réalisation de l'invention est la suivante : eau, mélange d'eau et de propylène glycol, ainsi que des liquides présentant une température d'ébullition entre 70°C et 150°C, une chaleur latente la plus élevée possible et une température d'inflammabilité restant suffisamment élevée pour ne pas poser de problème en cas d'emballement d'un accumulateur.

Au final, l'invention apporte de nombreux avantages parmi lesquels on peut citer:
A/ en fonctionnement statique, c'est-à-dire lorsque le liquide caloporteur à l'intérieur de l'enveloppe étanche n'est pas en circulation:
   - absorption de l'essentiel du flux thermique généré par un accumulateur en emballement thermique au sein d'un pack,
   - évacuation de l'énergie thermique au plus près de l'accumulateur en emballement thermique, de préférence au niveau d'au moins une borne de l'accumulateur, ce qui est d'autant plus favorable que le flux thermique émis par l'accumulateur est souvent le plus important dans cette zone ;
   - distribution passive du liquide caloporteur par gravité pendant son ébullition locale ; contribution de l'ensemble du fluide disponible à l'évacuation des calories quel que soit l'accumulateur en défaut ; maintien d'un bon échange thermique via le maintien de la présence du liquide et efficacité du refroidissement via la vaporisation.
   - pas d'ajout de masse métallique en plus dans un pack-batterie comparativement à l'état de l'art. En effet, les deux tôles qui permettent de réaliser l'enveloppe étanche selon l'invention peuvent avoir une épaisseur cumulée qui est sensiblement la même que celle unique d'un busbar massif traditionnel.
B/ en fonctionnement dynamique, c'est-à-dire avec une circulation de liquide au sein de l'enveloppe étanche :
   - utilisation du liquide caloporteur pour faire le refroidissement du pack-batterie en conditions normales (charge/décharge, charge rapide).
   - sous-dimensionnement électrique possible d'un busbar selon l'invention du fait de son refroidissement par le liquide caloporteur qu'il contient : la section du busbar, et donc sa masse peut être réduite et cela peut compenser au moins en partie la masse de liquide caloporteur de refroidissement circulant dans le pack-batterie ;
   - surveillance de la température du liquide caloporteur afin de détecter un échauffement anormal de celui-ci causé par le début d'un emballement thermique au sein d'un pack batterie. On peut alors avantageusement envisager d'appliquer une stratégie de protection du pack-batterie et de maintien du service, comme par exemple couper électriquement un module ou une branche du pack, ou encore déclencher un extincteur, etc....

Pour une application à un pack-batterie Li-ion, chaque accumulateur est un accumulateur Li-ion dans lequel :
- le matériau d'électrode(s) négative(s) est choisi dans le groupe comportant le graphite, le lithium, l'oxyde de titanate Li₄TiO₅O₁₂ ;
- le matériau d'électrode(s) positive(s) est choisi dans le groupe comportant LiFePO₄, LiCoO₂, LiNi_{0.33}Mn_{0.33}Co_{0.33}O₂.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] est une vue schématique en perspective éclatée montrant les différents éléments d'un accumulateur lithium-ion.
[Fig 2] est une vue de face montrant un accumulateur lithium-ion avec son emballage souple selon l'état de l'art.
[Fig 3] est une vue en perspective d'un accumulateur lithium-ion selon l'état de l'art avec son emballage rigide constitué d'un boitier de forme cylindrique.
[Fig 4] est une vue en en perspective d'un accumulateur lithium-ion selon l'état de l'art avec son emballage rigide constitué d'un boitier de forme prismatique.
[Fig 5] est une vue en perspective d'un assemblage au moyen de busbars d'accumulateurs lithium-ion selon l'état de l'art, formant un pack-batterie.
[Fig 6] est une vue en perspective du dessus d'un module de pack-batterie équipé avec un busbar selon un premier mode de réalisation de l'invention.
[Fig 6A] est une vue en perspective et en coupe longitudinale d'un module selon la figure 6.
[Fig 7] est une vue en perspective du dessus d'un module de pack-batterie équipé avec un busbar selon un deuxième mode de réalisation de l'invention.
[Fig 7A] est une vue en perspective et en coupe longitudinale d'un module selon la figure 7.
[Fig 7B] est une vue de détail de la figure 7A.
[Fig 7C] est une vue schématique en coupe longitudinale d'un module analogue à celui de la figure 7 au niveau d'un accumulateur.
[Fig 8] reprend la figure 7 et illustre une circulation du liquide caloporteur au sein du busbar selon le deuxième mode de réalisation.
[Fig 9] est une vue en perspective d'un module selon la figure 7, dans une configuration de fonctionnement avec le busbar à la verticale, la figure 9 montrant l'évacuation des gaz émis lors de la vaporisation du liquide caloporteur.

### Description détaillée

Les figures 1 à 5 sont relatives à des exemples différents d'accumulateur Li-ion, d'emballages souples et boitiers d'accumulateurs ainsi qu'un pack-batterie selon l'état de l'art. Ces figures 1 à 5 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 9.

Dans l'ensemble de la présente demande, les termes « inférieur », « supérieur », « bas », « haut », « dessous » et « dessus » sont à comprendre par référence par rapport à des boitiers d'accumulateurs Li-ion inclinés par rapport à la verticale, c'est-à-dire avec un busbar selon l'invention incliné par rapport à l'horizontal.

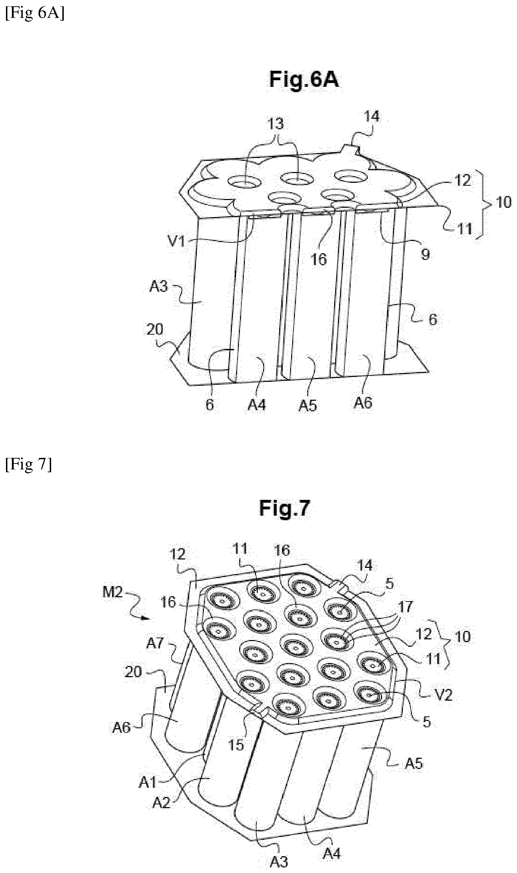

On a représenté en figures 6 et 6A, un premier exemple de busbar 10 selon l'invention dans d'un module M1 d'un pack-batterie P d'accumulateurs Li-ion, A1, A2,...,A17.

Dans les exemples illustrés, les accumulateurs A1-A17 illustrés sont à boitiers de format cylindrique, typiquement de format 18650 ou 21700.

Les accumulateurs A1-A17 sont supportés par une plaque support 20 et sont reliés électriquement en parallèles par groupe par le busbar 10.

Le busbar 10 selon l'invention est une enveloppe étanche agencée au-dessus du couvercle 9 des accumulateurs Li-ion A1-A17. On précise ici que le terme « au-dessus » est ici à considérer avec les accumulateurs Li-ion en position verticale, et donc avec le busbar 10 agencé à l'horizontal au-dessus, ce qui n'est pas la configuration de fonctionnement des modules M1, M2, dans laquelle le busbar 10 est incliné par rapport à l'horizontal. L'enveloppe étanche du busbar 10 est constituée de deux tôles métalliques 11, 12, assemblées entre elles de manière étanche, par soudure S2, S3, pour délimiter intérieurement un contenant V1 de liquide caloporteur, destiné à être agencé en regard des couvercles 9 de l'ensemble des accumulateurs d'où font saillie leurs bornes de sortie positives 4 ou négatives 5.

La tôle 11 la plus proche des accumulateurs est d'épaisseur moindre par rapport à la tôle extérieure 12.

La tôle 11 est fixée par soudure S1 à chaque borne de sortie négative 5 des accumulateurs. Dans ce module M1, le busbar 10 a donc un contenant V1 qui constitue une poche de liquide caloporteur, qui est délimité par toute la surface de tôle 11 et de tôle 12 en regard des accumulateurs, à l'exception des zones 13 en regard des espaces entre accumulateurs.

Ce contenant V1 peut être fermé et donc être un volume fini.

On peut aussi prévoir aux extrémités du volume V1 une entrée 14 et une sortie 15 pour permettre une circulation de liquide caloporteur en son sein. Placés en partie haute du pack, les entrée 14 ou sortie 15 peuvent aussi servir à échapper le gaz de vaporisation du caloporteur.

Cette circulation de liquide caloporteur au sein du volume V1 est intégrée au circuit de liquide caloporteur du pack-batterie qui intègre le module M1, qui va donc permettre de refroidir la pluralité d'accumulateurs A1-A17 par la circulation de liquide caloporteur au sein de busbars 10 selon l'invention.

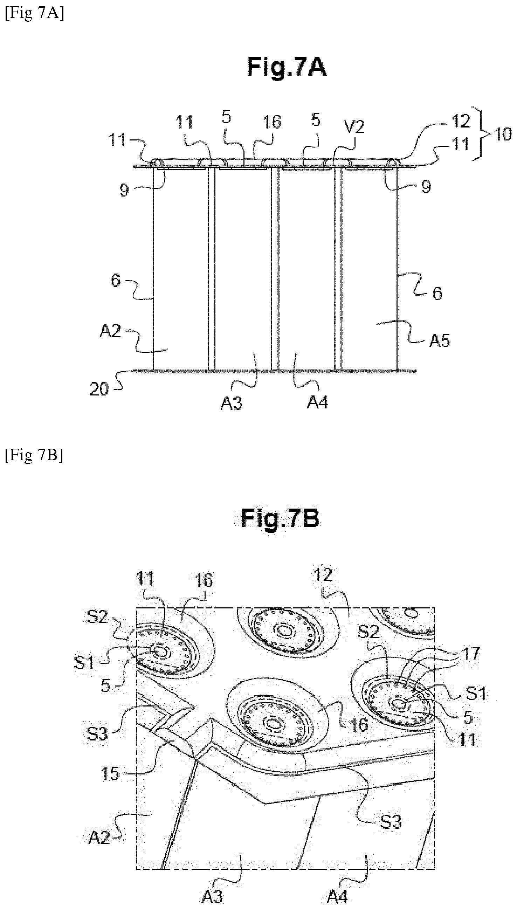

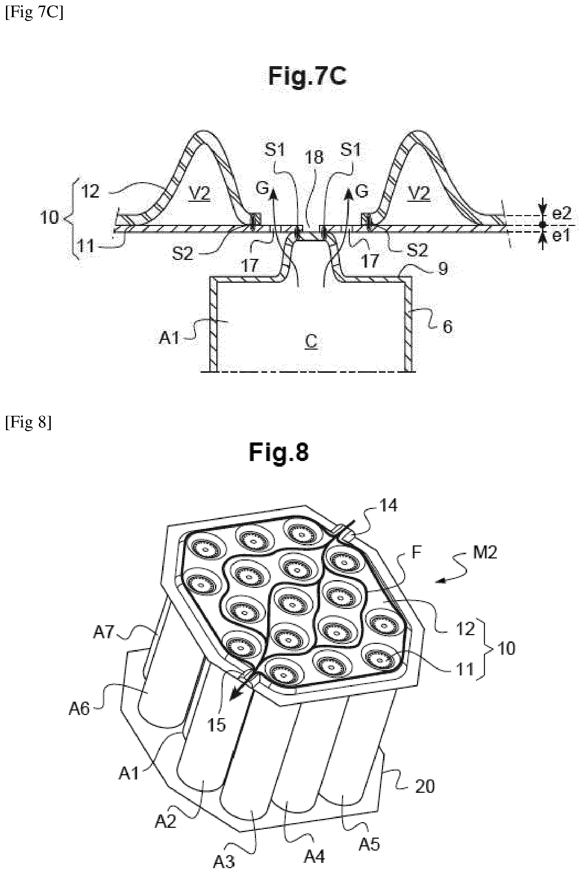

On a représenté en figures 7 à 7C, un deuxième exemple de busbar 10 selon l'invention dans d'un module M2 d'un pack-batterie P d'accumulateurs Li-ion, A1, A2,...,A17.

Les accumulateurs A1-A17 sont également supportés par une plaque support 20 et sont reliés électriquement en parallèles par groupe par le busbar 10.

L'enveloppe étanche du busbar 10 est également ici constituée de deux tôles métalliques 11, 12, assemblées entre elles de manière étanche, par soudure S2, S3, pour délimiter intérieurement un contenant V2 de liquide caloporteur, destiné à être agencé en regard des couvercles 9 de l'ensemble des accumulateurs d'où font saillie leurs bornes de sortie positives 4 ou négatives 5.

La tôle 11 la plus proche des accumulateurs est d'épaisseur moindre par rapport à la tôle extérieure 12. A titre d'exemple, l'épaisseur e1 de la tôle 11 peut être comprise entre 0,05 et 0,5 mm, typiquement égale à 0,1mm, tandis que celle e2 de la tôle 12 peut être comprise entre 0,1 à 2 mm, typiquement égale à 0,3.mm.

Avec une tôle 11 d'épaisseur moindre, la barrière thermique à passer entre chaque accumulateur et le liquide caloporteur dans le contenant V2 est moindre. La section de passage du courant peut être assurée par la tôle extérieure 12 plus épaisse en éloignant des bornes les points de contact entre plaques.

La tôle 11 est également fixée par soudure S1 à chaque borne de sortie positives 4 ou négative 5 des accumulateurs.

La différence de structure entre le module M2 selon les figures 7 à 7C et celui M1 des figures 6, 6A est que dans ce module M2, le busbar 10 a un contenant V2 qui constitue une poche de liquide caloporteur, qui est délimité par toute la surface de tôle 11 en regard des accumulateurs, à l'exception des zones 16 en regard des faces d'extrémité 9 des accumulateurs.

Ainsi, comme mieux visible en figures 7B et 7C, dans les zones 16, la tôle 11 sur laquelle sont soudées par les soudures S1 les bornes des sortie positives 4 ou négatives 5 est apparente et en contact avec l'environnement au-dessus du module M2.

La tôle 11 comprend en outre des trous traversant 17, en dehors des zones du contenant V2 du liquide. Ces trous traversant 17 permettent d'évacuer les gaz émis par au moins un accumulateur en emballement thermique.

De préférence, comme montré aux figures 7 à 7B, les trous traversant 17 sont répartis en anneaux, chaque anneau étant en regard d'une face d'extrémité 9 d'un accumulateur, autour d'une borne de sortie par laquelle les gaz peuvent s'échapper.

Les soudures d'assemblage S2, S3 entre les deux tôles 11, 12 sont distantes des zones 16 en regard des bornes de sorties des accumulateurs. Cela permet de limiter la conduction thermique entre accumulateurs par la tôle 12 la plus épaisse, i.e. celle extérieure.

Afin de permettre un centrage optimisé lors du positionnement du busbar 10 par rapport à chaque accumulateur, on peut prévoir des trous 18 qui vont chacun venir en regard d'une borne de sortie avant la réalisation des soudures S1.

Le contenant V2 peut aussi être fermé et donc être un volume fini.

On peut aussi prévoir aux extrémités du volume V2 une entrée 14 et une sortie 15 pour permettre une circulation de liquide caloporteur en son sein à partir du circuit de liquide caloporteur du pack-batterie, voire des évents pour évacuer le gaz issu de la vaporisation du caloporteur

La figure 8 illustre la circulation de liquide caloporteur F diélectrique de manière homogène partout en regard des surfaces entre les accumulateurs A1-A17, au plus proche des bornes de sortie positives 4 ou négatives 5.

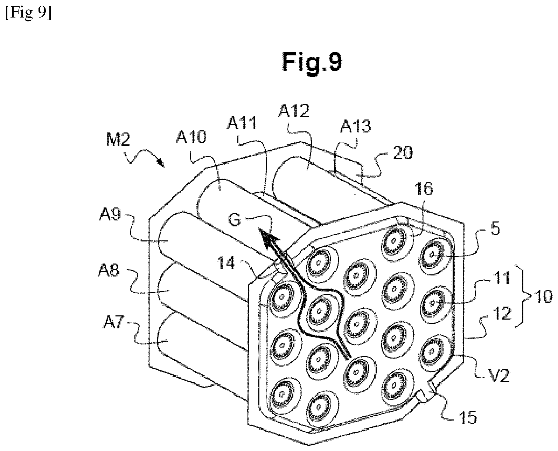

La figure 9 montre une configuration de fonctionnement dans laquelle le busbar du module M2 est à la verticale, et de manière sous la forme d'une flèche l'évacuation des gaz G émis lors de la vaporisation du liquide caloporteur provoqué par l'emballement thermique d'un accumulateur au sein du module.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Par exemple, si le busbar qui vient d'être décrit comprend une enveloppe étanche constituée de l'assemblage exactement de deux tôles 11, 12 entre elles, on peut prévoir un assemblage de trois tôles avec une tôle supplémentaire.

Cette tôle supplémentaire aurait pour fonction de récupérer les gaz émis par les trous 17, les canaliser pour limiter l'impact de leur toxicité et les refroidir avec le caloporteur. Cette troisième tôle peut dans ce cas être plus épaisse sur les deux autres tôles 11, 12.

D'autres trous ou des évents de sécurité peuvent être prévus pour laisser passer les gaz issus du changement de phase du caloporteur car ce dernier va augmenter le volume nécessaire à l'encapsulation de celui-ci dans l'enveloppe étanche du busbar. Ces trous ou events en partie haute peuvent être placés par exemple en bout d'entrée 14 ou de sortie 15 (figures 6 à 9).

### Liste des références citées :

[1] Xuning Fenga, et al. « Key Characteristics for Thermal Runaway of Li-ion Batteries » Energy Procedia, 158 (2019) 4684-4689

## Revendications

1. Busbar (10) pour pack-batterie (P), destiné à connecter électriquement au moins un accumulateur électrochimique (A1, A2, ...) du pack, de préférence à connecter électriquement plusieurs accumulateurs électrochimiques du pack entre eux, comprenant une enveloppe électriquement conductrice et étanche (10) destinée elle-même à conduire le courant des accumulateurs et adaptée pour contenir un liquide caloporteur dont la température de vaporisation est choisie pour être comprise entre une valeur proche de 90% de la température d'auto-échauffement (T1) et une valeur proche de 110% de la température d'emballement thermique (T2) des accumulateurs du pack, l'enveloppe étanche étant adaptée pour garantir un apport en liquide caloporteur au plus près de chaque accumulateur auquel elle est destinée à être connectée, de préférence à proximité d'au moins une de ses bornes de sorties.

2. Busbar (10) selon la revendication 1, l'enveloppe étant un volume fini étanche contenant le liquide caloporteur, destiné à être agencé au moins en partie au plus près de chaque accumulateur auquel elle est connectée, de préférence au plus près d'au moins une des bornes de sorties (4 ou 5) de chaque accumulateur.

3. Busbar (10) selon la revendication 1, l'enveloppe étant une partie d'un circuit de circulation du liquide caloporteur destinée à être agencée au moins en partie au plus près de chaque accumulateur auquel elle est connectée, de préférence au plus près d'au moins une des bornes de sorties (4 ou 5) de chaque accumulateur.

4. Busbar (10) selon l'une des revendications 1 à 3, l'enveloppe étant constituée de deux tôles électriquement conductrices, de préférence métalliques (11, 12), assemblées entre elles de manière étanche, de préférence par soudure, pour délimiter intérieurement un contenant (V1, V2) de liquide caloporteur, destiné à être agencé en regard ou autour d'une face d'extrémité (9) de chaque accumulateur.

5. Busbar (10) selon la revendication 4, le contenant (V1) étant délimité par toute la surface de tôle destinée à venir en regard des accumulateurs, à l'exception des zones (13) destinées à venir en regard des espaces entre accumulateurs.

6. Busbar (10) selon la revendication 4, le contenant (V2) étant délimité par toute la surface de tôle destinée à venir en regard des accumulateurs, à l'exception des zones (16) destinées à venir en regard des faces d'extrémité des accumulateurs.

7. Busbar (10) selon l'une des revendications 4 à 6, l'enveloppe comprenant des trous traversant (17) les deux tôles assemblées, en dehors des zones du contenant du liquide, les trous traversant étant destinés à évacuer les gaz émis par au moins un accumulateur en emballement thermique, les trous traversant (17) étant de préférence répartis en anneaux, chaque anneau étant destiné à venir en regard d'une face d'extrémité d'un accumulateur, de préférence autour d'une borne de sortie par laquelle les gaz peuvent s'échapper.

8. Busbar (10) selon la revendication 7, comprenant une tôle supplémentaire, de préférence électriquement conductrice, et de préférence assemblée à l'enveloppe étanche, cette tôle supplémentaire étant agencée pour récupérer les gaz émis par les trous, les canaliser et les refroidir avec le liquide caloporteur.

9. Busbar (10) selon l'une des revendications 4 à 7, l'une des deux tôles (11) étant d'épaisseur moindre par rapport à l'autre des deux tôles (12), la tôle d'épaisseur moindre étant destinée à être la plus proche des accumulateurs auxquels elle est destinée à être connectée.

10. Busbar (10) selon la revendication 8, les soudures d'assemblage (S2, S3) entre les deux tôles étant distantes des zones destinées à venir en regard des bornes de sorties des accumulateurs.

11. Pack-batterie (P) comprenant au moins un module (M1, M2) comprenant:
- une pluralité d'accumulateurs de géométrie cylindrique (A1, A2...A8) comprenant chacun au moins une cellule électrochimique C formée d'une cathode (2), d'une anode (3) et d'un électrolyte intercalé entre la cathode et l'anode, un boitier (6) agencé pour contenir avec étanchéité la cellule électrochimique et deux bornes de sortie (4, 5) faisant saillie du couvercle et/ou du fond du boitier;
- au moins un busbar (10) selon l'une des revendications précédentes, soudé (S1) à une des bornes de sortie (4 ou 5) d'au moins une partie des accumulateurs, afin de les relier électriquement entre eux.

12. Pack-batterie selon la revendication 11, le busbar étant selon l'une des revendications 3 à 10, le pack comprenant un circuit de fluide, configuré pour faire circuler un fluide caloporteur, éventuellement diphasique liquide-vapeur, dans le busbar.

13. Pack-batterie selon la revendication 12, le circuit étant configuré pour permettre un approvisionnement du liquide caloporteur en regard ou autour de chaque accumulateur, de manière passive par gravité.

14. Pack-batterie selon l'une des revendications 11 à 13, le busbar (10) étant incliné par rapport à l'horizontal lorsque le pack est en configuration de fonctionnement, de sorte à permettre l'évacuation des gaz issus de la vaporisation du liquide caloporteur, par le haut du pack.

15. Pack-batterie selon l'une des revendications 11 à 14, chaque accumulateur étant un accumulateur Li-ion dans lequel :
- le matériau d'électrode(s) négative(s) est choisi dans le groupe comportant le graphite, le lithium, l'oxyde de titanate Li₄TiO₅O₁₂ ;
- le matériau d'électrode(s) positive(s) est choisi dans le groupe comportant LiFePO₄, LiCoO₂, LiNi_{0.33}Mn_{0.33}Co_{0.33}O₂.
